# EUROPÄISCHE PATENTSCHRIFT

(11) **EP 2 712 021 B1**
(45) Veröffentlichungstag und Bekanntmachung des Hinweises auf die Patenterteilung: **04.04.2018**
(21) Anmeldenummer: 12185408.7
(22) Anmeldetag: 21.09.2012
(51) Int. Cl.: H01Q 1/22, G06K 7/10

(54) **Antenne für ein Schreib-/Lesegerät für RFID-Anordnungen und Schreib-/Lesegerät für den Betrieb mit einer externen Antenne**
Antenna for a read/write device for RFID assemblies and read/write device for operation with an external antenna
Antenne pour un appareil d'écriture/de lecture pour agencements RFID et appareil d'écriture/de lecture pour le fonctionnement avec une antenne externe

(43) Veröffentlichungstag der Anmeldung: 26.03.2014
(73) Patentinhaber: Siemens Aktiengesellschaft, 80333 München (DE)
(72) Erfinder: Mayer, Lukas W., 1020 Wien (AT); Horst, Dieter, 90556 Cadolzburg (DE); Resel, Leopold, 1030 Wien (AT); Schiefer, Martin, 3100 St. Pölten (AT)

(56) Entgegenhaltungen:
- DE-A1-102009 045 186
- JP-A- 2011 139 342
- US-A1- 2004 212 493
- US-A1- 2004 257 284
- US-A1- 2008 129 509
- US-A1- 2012 075 073

## Beschreibung

Die Erfindung betrifft eine Antenne für ein Schreib-/Lesegerät für RFID-Anordnungen gemäß dem Oberbegriff des Patentanspruchs 1, ein Schreib-/Lesegerät für RFID-Anordnungen gemäß dem Oberbegriff des Patentanspruchs 9, ein System aus einem Schreib-/Lesegerät für RFID-Anordnungen und einer externen Antenne gemäß dem Oberbegriff des Patentanspruchs 10, und ein Verfahren zur Anpassung eines Schreib-/Lesegerätes für RFID-Anordnungen an eine externe Antenne gemäß dem Oberbegriff des Patentanspruchs 11. Schreib-/Lesegeräte für RFID-Anordnungen, z.B. im UHF-Frequenzband, werden häufig mit externen Antennen betrieben, insbesondere bei solchen Anordnungen, bei denen eine interne Antenne allein zur Abdeckung eines geforderten Funkbereichs nicht ausreicht. So kann beispielsweise ein Ladetor in der Logistik zur besseren Funkabdeckung mit vier Antennen ausgestattet werden, wobei alle vier Antennen an ein einziges Schreib-/Lesegerät ("Reader") angeschlossen sind, wobei im Schreib-/Lesegerät beispielsweise mittels einer Umschaltmatrix ein wechselweiser Betrieb der verschiedenen Antennen realisiert wird.
Zumindest bei der erstmaligen Installation der RFID-Anordnung, also des Schreib-/Lesegerätes und der Antennen, muss ein Anwender bei der Konfiguration des Schreib-/Lesegerätes sorgfältig die verwendeten Antennenleitungen und Antennen in dem Schreib-/Lesegerät parametrieren. So ist es beispielsweise erforderlich, mit steigendem Antennengewinn die maximale Sendeleistung zu reduzieren, um die gesetzlichen Bestimmungen einzuhalten. Andererseits kann bei Antennenleitungen bzw. bei Verbindungen zwischen dem Hochfrequenz-Schaltkreis des Schreib-/Lesegerätes und dem Strahlungselement der Antenne je nach Dämpfung und je nach Anpassung (z.B. Reflexionsfaktor) zu Verlusten kommen, die durch eine höhere Sendeleistung des Schreib-/Lesegerätes ausgeglichen werden können bzw. dürfen. Nur durch eine exakte Konfiguration des Schreib-/Lesegerätes hinsichtlich des Typs bzw. der Eigenschaften der verwendeten Antenne und der Eigenschaften der verwendeten Antennenleitung (Kabel) kommt es zur gewünschten bzw. erlaubten Strahlungsleistung, wobei andererseits bei einer Fehl-Konfiguration, beispielsweise bei einer zu hoch eingestellten Kabeldämpfung, ggf. zur Überschreitung der zulässigen Strahlungsleistung kommen kann.
Die Druckschrift JP2011139342A - Tadashi "Device and method for adjusting antenna radiation power" zeigt die Verwendung eines Referenz-RFID-Datenträgers zur Kompensation des Leitungsverlustes einer Sendeleistung unter Verwendung einer Antenne mit einer Antennenleitung, wobei vorgesehen ist, bei der Verwendung einer Antenne mit einer Antennenleitung mit abweichender Länge anhand des aufgrund des Längenunterschieds errechneten abweichenden Leitungsverlustes die Sendeleistung anzupassen.
Die Druckschrift DE102009045186A1 - Tietke et al. "RFID-Lesegerät, RFID-System, Verfahren zur Regelung der Sendeleistung eines RFID-Lesegeräts und Computerprogrammprodukt" zeigt ein HF RFID-Lesegerät mit induktiver Kopplung, wobei das Lesegerät mit einer Meßeinrichtung zur Erfassung der Feldstärke des emittierten magnetischen Wechselfeldes und zur Regelung der Sendeleistung aufweist.

Die Druckschrift US2004/0212493A1 - Stilp "RFID reader for a security network" zeigt eine Anordnung mit eienr Mehrzahl RFID-Transponder, wobei die Sendeleistung des RFID-Lesegrätes zur Sicherstellung einer Kommunikation situationsbedingt angepasst werden kann. Die Druckschrift US2004/257284 - Rada et al. "Detachable 802.11A antenna detection" zeigt eine abnehmbare Antenne für ein Funkgerät, die Mittel zur Leistungsmessung und zur Ermittlung von Identifikationsdaten umfasst.

Die Druckschrift US2008/129509 - Duron "RFID interrogations of system components in RFID systems" offenbart eine Antenne mit einem RFID Transponder zur Identifikation der Antenne. Der Transponder kann Leistungsmessungen durchführen und das Ergebnis mit vergangenen Messungen vergleichen.

Die Druckschrift US2012/075073 - Fislage "RFID reader device" zeight ein RFID Lesegerät, das sich an eine abnehmbare Antenne anschließen kann. Die Antenne hat einen Datenträger mit gespeicherten Antenneneigenschaften, die der Leser benutzt, um die Sendeparameter entsprechend anzupassen.

Zur Konfiguration eines Schreib-/Lesegerätes bezüglich der "Antennen-Konfiguration" muss für jeden verwendeten "Anten nenport", also für jeden Antennenanschluss, manuell eingegeben werden, welche Leitungsparameter (z.B. Kabeldämpfung) und welche Antenne (Typ oder Antennengewinn) verwendet wird. Dies ist zum einen für einen Anwender umständlich, da er ggf. in Handbüchern, Tabellen oder dgl. nachschlagen muss, welche Werte einzustellen sind, und andererseits können durch Fehleingaben gesetzliche Bestimmungen verletzt werden oder aber Betriebsstörungen auftreten. Weiterhin ist die Gefahr gegeben, dass bei einer Änderung der Betriebsfrequenz, beim Austausch einer Antenne oder beim Austausch einer Antennenleitung eine Anpassung der Konfiguration unterbleibt, wodurch ebenfalls Störungen oder unerlaubte Betriebszustände auftreten können.

Es ist daher die eine Aufgabe der vorliegenden Erfindung, die Konfiguration von Schreib-/Lesegeräten für RFID-Anordnungen hinsichtlich der verwendeten Antennen und Antennenleitungen zu vereinfachen.

Es ist eine Kernidee der erfindungsgemäßen Lösung der Aufgabe, die für die RFID-Anordnungen vorgesehenen Antennen mit einem durch Schreib-/Lesegeräte auslesbaren Datenspeicher zu versehen, wobei in dem Datenspeicher Informationen über den Typ der Antenne bzw. die technischen Eigenschaften der Antennen (z.B. den Antennengewinn) auszustatten. Dabei soll erfindungsgemäß weiterhin die Antenne derart ausgestaltet sein, dass diese eine Konfigurierung zumindest der maximalen Sendeleistung des Schreib-/Lesegerätes unabhängig von der verwendeten Antennenleitung bzw. deren technischen Eigenschaften (z.B. Dämpfung) gewährleistet. Dazu ist erfindungsgemäß vorgesehen, dass ein von dem Schreib-/Lesegerät über die Antennenleitung in die Antenne eingespeistes Hochfrequenz-Signal zumindest für den Fall, für den ein Grenzwert oder Schwellwert erreicht oder überschritten wird, zu einer entsprechenden Meldung der Antenne an das Schreib-/Lesegerät führt, wodurch das Schreib-/Lesegerät in die Lage versetzt wird, Leitungsverluste oder dgl. zu erkennen bzw. zu kompensieren.
Die Aufgabe wird insbesondere durch eine Antenne gemäß dem Patentanspruch 1, durch ein Schreib-/Lesegerät gemäß Patentanspruch 9, durch ein System gemäß Patentanspruch 10 und durch ein Verfahren gemäß Patentanspruch 11 gelöst.
Die Lösung der Aufgabe sieht dabei eine Antenne für ein Schreib-/Lesegerät für RFID-Anordnungen vor, wobei die Antenne zum Anschluss an einen externen Antennenanschluss des Schreib-/Lesegerätes mittels einer Antennenleitung vorgesehen ist. Dabei ist die Antenne mit einem Datenspeicher mit Typinformationen und/oder mit Eigenschaftsinformationen ausgestattet, wobei der Inhalt des Datenspeichers von dem Schreib-/Lesegerät auslesbar ist, und wobei die Antenne eine Messeinrichtung zur Bestimmung zumindest eines Wertes der Feldstärke oder Leistung eines in die Antenne von dem Schreib-/Lesegerät eingespeisten Hochfrequenzsignals aufweist, wobei die Antenne Mittel zur Information des Schreib-/Lesegerätes über das Erreichen oder Überschreiten des zumindest einen Wertes aufweist. Die Antenne weist Mittel zur Übertragung des Inhaltes des Datenspeichers und zur Information des Schreib-Lesegerätes über das Erreichen oder Überschreiten des zumindest einen Wertes mittels eines getakteten Kurzschließens der Antennenleitung auf, wobei die Antenne zum bitweisen Übertragen der zu übertragenden Informationen durch das getaktete Kurzschließen ausgestaltet ist. Durch eine solche Antenne kann eine sog. "Plug-and-Play"-Lösung erreicht werden, bei der ein Anwender keine auf die Antenne oder die Antennenleitung bezogenen Parameter an dem Schreib-/Lesegerät konfigurieren muss. Darüber hinaus kann eine solche Antenne mit einem Schreib-/Lesegerät verwendet werden, welches seitens seiner Hardware-Ausstattung dem Stand der Technik entsprechen kann; allenfalls auf Firmware- oder auf Anwendungsebene muss ein Schreib-/Lesegerät für die automatische Konfiguration mit der erfindungsgemäßen Antenne eingerichtet sein.
Die Aufgabe wird weiterhin durch ein Schreib-/Lesegerät für RFID-Anordnungen gelöst, wobei das Schreib-/Lesegerät zur Anpassung einer Sendeleistung und/oder zur Bestimmung einer maximalen Sendeleistung in Abhängigkeit vom Typ oder von Eigenschaften der verwendeten Antenne und in Abhängigkeit der Dämpfung einer verwendeten Antennenleitung eingerichtet ist.
Dabei ist das Schreib-/Lesegerät zum Auslesen einer Typ- oder Eigenschaftsinformation aus der Antenne und zur selbsttätigen Berücksichtigung der Dämpfung durch Empfang einer Information über das Erreichen oder Überschreiten zumindest eines Wertes für die Feldstärke oder Leistung eines in der Antenne vom Schreib-/Lesegerät eingegangenen Hochfrequenz-Signals und zur In-Betriebzugsetzung dieses zumindest einen Wertes zu einem relativen oder absoluten Wert für das dabei von dem Schreib-/Lesegerät abgegebene Hochfrequenz-Signal eingerichtet. Das Schreib-Lesegerät ist zum Empfang der von der Antenne mittels eines getakteten Kurzschließens der Antennenleitung bitweisen übertragenen Inhaltes des Datenspeichers und der Information über das Erreichen oder Überschreiten des zumindest einen Wertes ausgestaltet, wobei das Schreib-/Lesegerät zur Ermittlung der maximalen oder einer zu verwendenden Sendeleistung anhand der Typ- oder Eigenschaftsinformationen und anhand des Bezuges zwischen der Leistung des abgegebenen Hochfrequenz-Signals und der Information über den zumindest einen Wert eingerichtet ist. Ein solches Schreib-/Lesegerät ist in Verbindung mit einer entsprechend ausgestalteten Antenne zur selbsttätigen Konfigurierung der Antennen- und Leitungsparameter in der Lage.
Die Aufgabe wird weiter von einem System aus einem Schreib-/Lesegerät für RFID-Anordnungen und einer mittels einer Anschlussleitung angeschlossenen externen Antenne gelöst, wobei das System zur automatischen Anpassung des Schreib-/Lesegerätes an die Antenne und die verwendete Antennenleitung eingerichtet ist. Dabei ist das System aus dem zuvor beschriebenen Schreib-/Lesegerät und der zuvor beschriebenen Antenne gebildet. Ein solches System ermöglicht eine selbsttätige Konfiguration der Antennen- und Leitungsparameter in dem Schreib-/Lesegerät.
Schließlich wird die Aufgabe auch durch ein Verfahren zur Anpassung eines Schreib-/Lesegerätes für RFID-Anordnungen an einer mittels einer Anschlussleitung angeschlossenen externen Antenne gelöst. Dabei werden von dem Schreib-/Lesegerät aus der Antenne zumindest eine Typinformation und/oder zumindest eine Eigenschaftsinformation ausgelesen, wobei von dem Schreib-/Lesegerät zumindest ein Hochfrequenzsignal abgegeben und in die Antenne eingespeist wird, wobei von der Antenne eine Information über das Erreichen oder Überschreiten zumindest eines Wertes des in der Antenne erfassten Hochfrequenzsignals mittels eines getakteten Kurzschließens der Antennenleitung bitweise zu dem Schreib-/Lesegerät übermittelt wird, und wobei das Schreib-/Lesegerät anhand der Typinformation und/oder der Eigenschaftsinformationen der Antenne und anhand des Bezugs zwischen der relativen oder absoluten abgegebenen Leistung und dem zumindest einen Wert eine Anpassung, insbesondere einer maximalen Sendeleistung ausführt. Durch ein solches Verfahren ist eine selbsttätige Antennen- und Leitungskonfiguration in Schreib-/Lesegeräten von RFID-Anordnungen möglich.
Vorteilhafte Ausgestaltungen der erfindungsgemäßen Antenne sind in den abhängigen Patentansprüchen angegeben. Die dabei beschriebenen Merkmale und Vorteile gelten sinngemäß auch für das erfindungsgemäße Schreib-/Lesegerät, das erfindungsgemäße System und das erfindungsgemäße Verfahren. Die dabei beschriebenen vorteilhaften Ausgestaltungen können sowohl einzeln als auch in Kombination miteinander realisiert sein. Insbesondere ist es möglich, dass bei Schreib-/Lesegeräten mit mehreren Antennenanschlüssen (Antennenports, Ports) für jeden Antenennanschluss ein abweichendes selbsttätiges Konfigurierungs-Verfahren eingesetzt wird und an jedem dieser Antennenanschlüsse eine andere Antenne (unterschiedlicher Antennentyp, unterschiedlicher Konfigurierungs-Typ) und unterschiedliche Anschlussleitungen verwendet werden. In einem Beispiel verwendet die Antenne zur Übertragung des Inhaltes des Datenspeichers und zur Information des Schreib-/Lesegerätes über das Erreichen oder Überschreiten des zumindest einen Wertes das Kommunikationsverfahren der "modulierten Rückstreuung" gemäß einem RFID-Protokoll, womit erreicht wird, dass für das verwendete Schreib-/Lesegerät kein weiteres, separates Kommunikationsprotokoll implementiert werden muss. Das Verfahren der "modulierten Rückstreuung" ist im Bereich der RFID-Technologie auch als "Backscattern" oder "Lastmodulation" bekannt. Ein weiteres einfaches Beispiel, bei dem auf den Einsatz eines separaten Leistungs-Schwellschalters oder einer separaten Leistungsmesseinrichtung verzichtet werden kann, ergibt sich, wenn als der Wert eine Ansprechschwelle (Aktivierungsschwelle, "Wake-Up-Level") eines Datenspeichers, z.B. RFID-Transponder, verwendet wird, in dem die zu übertragenden Informationen zum Abruf bereitgehalten werden. Eine präzisere Detektierung des Wertes kann jedoch dadurch erreicht werden, dass die Antenne an einen an einer Hochfrequenzleitung oder an einem Strahlungselement angekoppelten Leistungssensor als Messeinrichtung aufweist, der derart eingerichtet und verschaltet ist, dass bei Erreichen oder Überschreiten eines minimalen Wertes der Feldstärke oder der Leistung (vom Schreib-/Lesegerät in die Antenne eingespeiste Feldstärke oder Leistung) der Datenspeicher oder die Übertragung der Informationen aktiviert wird, wobei die Mindest-Leistung als der zumindest eine Wert verwendbar ist. Bei diesem alternativen Beispiel spielt eine Serienstreuung oder eine Temperaturabhängigkeit der Ansprechschwelle des RFID-Transponders keine Rolle mehr.

Bei beiden genannten Beispielen kann der zumindest eine Wert, also der Aktivierungswert des Leistungsdetektors oder die Ansprechschwelle des RFID-Transponders, in dem Datenspeicher abgelegt sein, oder aber alternativ aus einer Typinformation, die in dem Datenspeicher niedergelegt ist, gewonnen werden, beispielsweise anhand eines Zugriffs auf Tabellen oder Datenbanken. Es können auch Anprechwerte für unterschiedliche Frequenzen oder Temperaturen hinterlegt werden. In einem weiteren Beispiel, alternativ zur Übertragung der Informationen mittels eines RFID-Protokolls kann die Antenne zur Übertragung des Inhalts des Datenspeichers und zur Information des Schreib-/Lesegerätes über das Erreichen oder Überschreiten des zumindest einen Wertes ein auf die Antennenleitung moduliertes Niederfrequenz-Signal verwenden, beispielsweise analog zum DiSEqC-Verfahren aus der Satelliten-Antennentechnik. Dies hat den Vorteil, dass keine RFID-Transponder und keine RFID-Seriennummern für das Kalibrierungsverfahren bereitgehalten werden müssen. Auf demselben Weg kann auch die Aktivierung des Datenspeichers bzw. die Übertragung der Informationen initiiert werden.

In der ersten Ausführungsform ist die Antenne zur Übertragung des Inhalts des Datenspeichers und zur Information des Schreib-/Lesegerätes über das Erreichen oder Überschreiten des zumindest einen Wertes mittels eines getakteten Kurzschließens der Antennenleitung eingerichtet, wobei durch das getaktete Kurzschließen die zu übertragenden Informationen bitweise übertragbar sind. Dies hat den Vorteil, dass während der Perioden, in denen ein Kurzschluss erzeugt wird, ein entsprechend ausgerüstetes Schreib-/Lesegerät weitere Leitungsparameter ausmessen kann, beispielsweise die Kabeldämpfung, oder Reflexionsverluste, die an der Antenne auftreten.
Zur Gewährleistung eines störungsfreien operativen Betriebs ist der Datenspeicher und/oder die Messeinrichtung vorteilhaft mittels eines über die Antennenleitung empfangenen Signals oder mittels einer an der Antennenleitung anliegenden Gleichspannung aktivierbar und deaktivierbar.
Vorteilhaft weist die Antenne eine Steuerungseinrichtung, insbesondere einen Mikrocontroller oder eine ähnliche programmierbare Schaltung auf, wobei die Steuerungseinrichtung zur Übermittlung des Inhalts des Datenspeichers und zumindest eines jeweils durch die Messeinrichtung gemessenen absoluten Wertes für die Feldstärke oder Leistung an das Schreib-/Lesegerät auf. Damit können die zu übertragenden Informationen flexibel eingestellt werden, wobei darüber hinaus auch weitere Messgrößen, beispielsweise ein Temperaturmesswert, erfasst und übertragen werden können. Dabei umfasst die Steuerungseinrichtung vorteilhaft den Datenspeicher bzw. stellt diesen dar. Ausführungsformen und Beispiele der Antenne werden nachfolgend anhand der Zeichnungen erläutert. Sie dienen gleichzeitig der Erläuterung von Ausführungsformen und Beispiele der Schreib-/Lesegeräte, Systeme aus Schreib-/Lesegeräten und Antennen sowie von entsprechender Verfahren.
Dabei zeigen:
- Figur 1: eine Anordnung aus einem Schreib-/Lesegerät und einer erfindungsgemäßen Antenne in einer ersten Ausführungsform,
- Figur 2: eine Anordnung aus einem Schreib-/Lesegerät und einer erfindungsgemäßen Antenne in einer zweiten Ausführungsform,
- Figur 3: eine Anordnung aus einem Schreib-/Lesegerät und einer erfindungsgemäßen Antenne in einer dritten Ausführungsform,
- Figur 4: eine Anordnung aus einem Schreib-/Lesegerät und einer erfindungsgemäßen Antenne in einer vierten Ausführungsform,
- Figur 5: eine Anordnung aus einem Beispiel des Schreib-/Lesegerätes und der Antenne und

- Figur 6: eine Anordnung aus einem Beispiel der Antenne.

Den nachfolgend geschilderten Verfahren und Anordnungen liegt das Problem zugrunde, dass eine Antenne mit einem Koaxialkabel als Antennenleitung an ein RFID-Schreib-/Lesegerät angeschlossen werden soll, wobei von dem Schreib-/Lesegerät der Antennentyp bzw. die technischen Eigenschaften der Antenne selbsttätig bestimmt werden sollen, und außerdem für das Schreib-/Lesegerät selbsttätig die Kabeldämpfung bzw. die (maximal erlaubte) Sendeleistung der Antenne ermittelt werden soll, und zwar durch die Informationen über den Antennentyp/Antenneneigenschaften und die Informationen über die Kabeldämpfung bzw. die bei einer gegebenen Sendeleistung in der Antenne anliegende verfügbare Hochfrequenz-Leistung. Dabei soll zum Beispiel gewährleistet sein, dass das maximal erlaubte EIRP (Equivalent Isotropically Radiated Power) nicht überschritten wird.
Die nachfolgend mit den Figuren eingeführten Bezugszeichen gelten jeweils, sofern nicht anders genannte, auch für nachfolgende Figuren und bezeichnen dort jeweils gleiche oder funktions-ähnliche Einrichtungen. Sie werden daher bei nachfolgenden Figuren nicht erneut eingeführt.

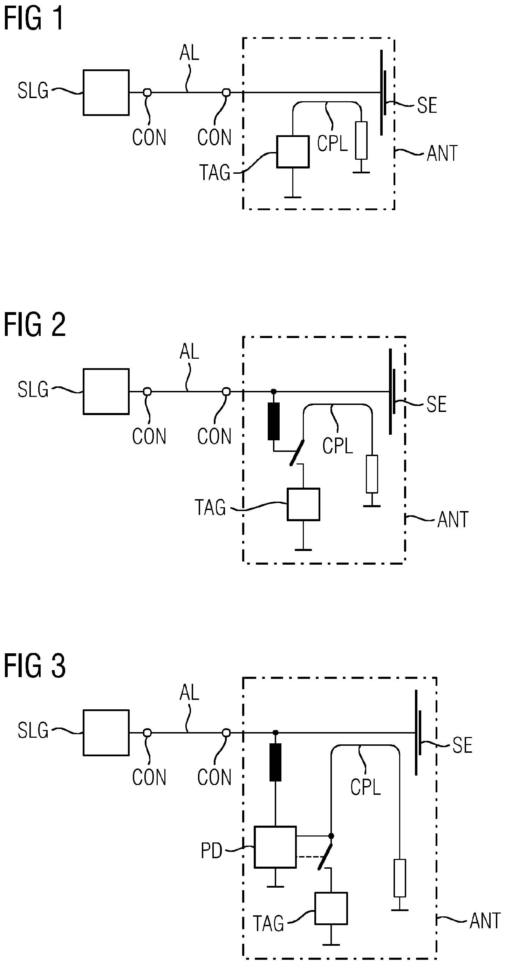

In der Figur 1 ist schematisch eine Anordnung (System) aus einem Schreib-/Lesegerät SLG und einer Antenne ANT dargestellt, die mittels einer Anschlussleitung AL (Koaxialkabel), welches an Anschlusssteckern CON (Connectors) angeschlossen ist, miteinander verbunden sind. Die Antenne weist als ein wesentliches Funktionselement ein Strahlungselement SE auf, an welchem die Hochfrequenz-Signale abgestrahlt bzw. empfangen werden. Das Strahlungselement SE, kurz: Strahler, entspricht dem Stand der Technik und kann beispielsweise dem einer "Patch Antenne" (planarer Strahler) entsprechen. Insofern entspricht die hier dargestellte Antenne ANT bezüglich ihrer HF-Eigenschaften einer Antenne aus dem Stand der Technik.

An einer internen Hochfrequenzleitung, beispielsweise einer Leiterbahn auf einer Leiterplatte, ist über einen Koppler CPL als ein Datenspeicher, ein RFID-Transponder-Chip TAG (kurz: Transponder-Chip) angekoppelt.

Anstelle des hier gezeigten Kopplers CPL (Richtkoppler) kann auch ein Leistungsteiler oder eine ähnliche Anbindung des RFID-Transponders an den Hochfrequenz-Pfad der Antenne ANT gewählt werden. Außerdem kann anstelle der Ankopplung an eine Hochfrequenzleitung innerhalb der Antenne ANT auch eine Ankopplung an das Strahlungselement SE erfolgen.

In dem RFID-Transponder TAG, also in dem Datenspeicher, sind Typinformationen und/oder technische Informationen über die Eigenschaften der Antenne ANT und speziell über die Eigenschaften des Strahlungselementes SE abgelegt. Konkret ist hierbei eine Typbezeichnung, beispielsweise ANT-0815, und ein Maß für den Antennengewinn, beispielsweise 3 dBi, angegeben. Neben diesen "Basisinformationen" können auch weitere technische Parameter und weitere Typinformationen in dem Datenspeicher gespeichert sein. Die Daten können beispielsweise in Tabellarischer Form in Abhängigkeit von Parametern wie Betriebsfrequenz und Temperatur abgelegt sein. Insbesondere ist es auch möglich, nur eine Typbezeichnung oder nur technische Eigenschaften zu speichern, wobei im erstgenannten Fall in einem externen Informationsspeicher, beispielsweise in einer Internet-gestützten Datenbank oder in einer Konfigurierungsdatei für Schreib-/Lesegeräte SLG, anhand der gespeicherten Typinformation die technischen Eigenschaften der Antenne, insbesondere der Antennengewinn, bestimmt werden können.

Der RFID-Transponder ist derart ausgestaltet, dass er mit dem verwendeten Schreib-/Lesegerät SLG "kompatibel" ist, also mittels dieses Gerätes gelesen werden kann. Zur automatischen Konfigurierung der Antenne in dem Schreib-/Lesegerät SLG beginnt dieses mit Erfassungszyklen ("Inventories"), wobei periodisch eine modulierte Hochfrequenz-Trägerwelle ("Abfragemeldung") gemäß dem verwendeten RFID-Protokoll ausgesendet wird. Optional kann eine solche Abfragemeldung jeweils eine Identifizierungsnummer bzw. einen Identifizierungsnummern-Bereich von solchen RFID-Transpondern TAG spezifizieren, welche zum "Antworten" auf die Abfragezyklen vorgesehen sind. Bei dieser Ausführungsform wird vorausgesetzt, dass die für Antennen ANT vorgesehenen RFID-Transponder jeweils eine bestimmte Identifizierungsnummer aufweisen bzw. einem bestimmten Bereich (Nummernkreis) von Identifizierungsnummern angehören. Damit kann gewährleistet werden, dass im späteren, laufenden Betrieb der für die Konfigurierung verwendete RFID-Transponder TAG nicht mehr auf weitere Erfassungszyklen antwortet und damit den produktiven Betrieb stört.

Das Schreib-/Lesegerät SLG beginnt die fortlaufenden Abfragezyklen mit einer sehr geringen, minimalen Sendeleistung. Diese Sendeleistung wird mit nachfolgenden Abfragezyklen sukzessive erhöht. Sobald die über den Koppler CPL in den RFID-Transponder TAG eingebrachte Hochfrequenzleistung zum Betrieb des Transponders TAG ausreicht ("Wake-Up"), antwortet der Transponder TAG, so dass dessen Datenspeicher mit den Informationen, also Typinformation und/oder Eigenschaftsinformationen, von dem Schreib-/Lesegerät SLG ausgelesen wird. Diese "Ansprechschwelle", deren Höhe in einer vorteilhaften Ausgestaltung in dem RFID-Transponder TAG (Transponder-Chip) als eine weitere Information gespeichert oder anhand einer Typinformation ermittelbar ist und damit an das Schreib-/Lesegerät übermittelbar ist, kann von dem Schreib-/Lesegerät mit der beim ersten erfolgreichen Erfassungszyklus eingesetzten Sendeleistung in Bezug gebracht werden; die dabei abgestrahlte bzw. abgegebene Hochfrequenzleistung kann dabei entweder als Absolutwert (z.B. 5 mW) oder als Relativwert (z.B. 25%) von einem Nennwert verwendet werden. Ebenso kann die "Ansprechschwelle" des RFID-Transponders TAG ein Absolutwert sein (z.B. 2 mW) oder auch ein Relativwert (z.B. 30%), wobei sich der Relativwert dann beispielsweise auf eine in einer Norm festgelegten maximale Strahlungsleistung (EIRP) einer Antenne mit einem Gewinn von 0 dBi bezieht, wobei der Antennengewinn als eine von der Antenne abgerufene Information von dem Schreib-/Lesegerät SLG zur Ermittlung der maximal möglichen bzw. erlaubten Sendeleistung berücksichtigt werden muss.

Eine Unsicherheit in der Koppeldämpfung des Kopplers CPL mit dem RFID-Transponder TAG und eine Streuung der "Ansprechschwelle" des RFID-Schaltkreises kann - wenn nötig - im Vorfeld kalibriert werden. Solche Kalibrationsdaten können nach einem werkseitigen Test der Antenne ANT direkt im Transponder TAG abgelegt werden und stehen anschließend jedem Schreib-/Lesegerät SLG zur Verfügung. Für das Koppelelement CPL sind in der Praxis Koppeldämpfungen in der Größenordnung von 30 dB vorteilhaft. Prinzipiell hängt dieser Wert von der maximalen Sendeleistung des Schreib-/Lesegerätes SLG, der "Zerstörungsgrenze" des Chips des Transponders TAG und von dem "Dynamikbereich" der HF-Endstufe des Schreib-/Lesegerätes SLG ab. Durch eine hohe Koppeldämpfung hat der Abschlusswiderstand des "Chips" des Transponders TAG keinen nennenswerten Einfluss auf den späteren produktiven Betrieb des RFID-Systems.

Der RFID-Transponder TAG kann während folgender Transaktionen im operativen Betrieb im Funkfeld der Antenne ANT auf "Silent" geschaltet werden, um den normalen Betrieb des Schreib-/Lesegerätes SLG nicht zu stören. Wie bereits skizziert wurde, kann dazu beispielsweise ein Nummernkreis von RFID-Seriennummern ("ID's") reserviert werden.

Eine alternative Ausführungsform zum Ein- und Ausschalten des Datenspeichers ist in der Figur 2 dargestellt. Hierbei kann mittels einer von dem Schreib-/Lesegerät SLG auf der Anschlussleitung AL bzw. dem Antennenanschluss eingeprägten Gleichspannung oder einem anderen elektrischen Signal der "Chip" des Transponders TAG mittels eines Halbleiterschalters nur bei Bedarf einer Identifikation und Leistungskalibrierung an den Koppler CPL angeschlossen werden. Nach Durchführung der "Kalibrierung" kann dann die Sendeleistung relativ zur "Aufwachleistung" oder "Ansprechschwelle" eingestellt werden. Mit der dargestellten Anordnung kann eine Temperaturbedingte Schwankung der Ansprechschwelle nicht kompensiert werden; die dargestellten Schaltungen können dazu jedoch ggf. mit einem Temperatursensor oder mit einer Temperatur-Kompensationsschaltung ausgerüstet werden.

Wie beschrieben, stellt die Verwendung eines RFID-Transponders TAG mit einer gemessenen bzw. bekannten Ansprechschwelle (Aktivierungsschwelle, Aktivierungsleistung) eine Messeinrichtung dar, mit der das Überschreiten einer Sendeleistung bzw. Feldstärke am Ort bzw. innerhalb der Antenne ANT als Wert für die Kalibrierung festgestellt werden kann. Wegen der bereits angesprochenen Temperaturabhängigkeit in Folge etwaiger Produktionsabweichungen und anderer Unwägbarkeiten ist diese Ansprechschwelle jedoch schwankend und "fehlerbehaftet". In der Figur 3 ist daher eine alternative Ausführungsform der erfindungsgemäßen Antenne ANT dargestellt, wobei die aus der Figur 2 bekannte Schaltung durch einen Leistungsdetektor PD ("Power Detector") ergänzt wurde; dieser wird beispielsweise durch eine auf der Sendeleitung eingeprägten Gleichspannung versorgt. Eine solche Gleichspannung kann auch bei Schreib-/Lesegeräten SLG aus dem Stand der Technik durch das Anschalten einer Einspeiseweiche realisiert werden, wobei die dazu erforderliche Energie (Gleichspannung) beispielsweise aus einem digitalen Ausgang eines Schreib-/Lesegerätes SLG bezogen werden kann; diese Ausführungsform hat weiterhin den Vorteil, dass mittels einer Software in dem Schreib-/Lesegerät SLG der "Kalibrierungsmodus" der Antenne ANT ein- und ausgeschaltet werden kann.

Durch die in der Figur 3 angegebene Schaltung mit dem Leistungsdetektor PD kann eine höhere Präzision und eine geringere Serienstreuung erreicht werden, verglichen mit der Abhängigkeit des Verfahrens von der "Ansprechschwelle" des RFID-Transponders TAG. Auch eine Temperaturkompensation unter der Zuhilfenahme einer Temperaturmessung ist dabei direkt in der Detektorschaltung möglich. Es ist darauf zu achten, dass die Leistungsschwelle, bei der der "Chip" des Transponders TAG an das Kopplungselement CPL geschaltet wird, deutlich höher liegt, als die Aufwachleistung (Ansprechschwelle) des "Chips" selbst. Auch hier ist die Identifikation der Antenne durch ein konventionelles Auslesen des "Chips" des RFID-Transponders TAG möglich, wobei bei abgeschalteter Gleichspannung die elektronische Schaltung inaktiv wird und somit den operativen Betrieb des Schreib-/Lesegerätes SLG nicht weiter beeinflusst.

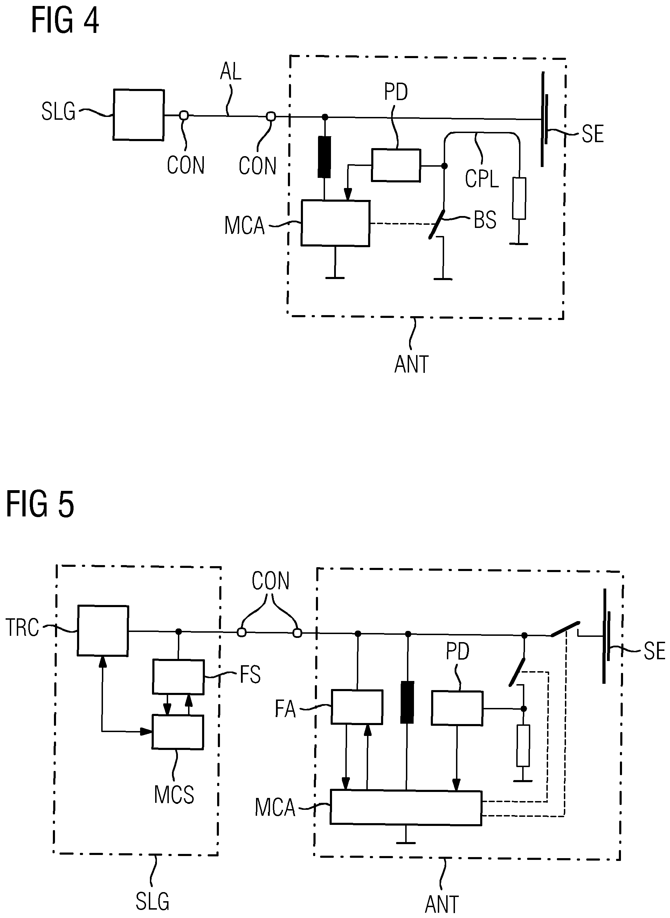

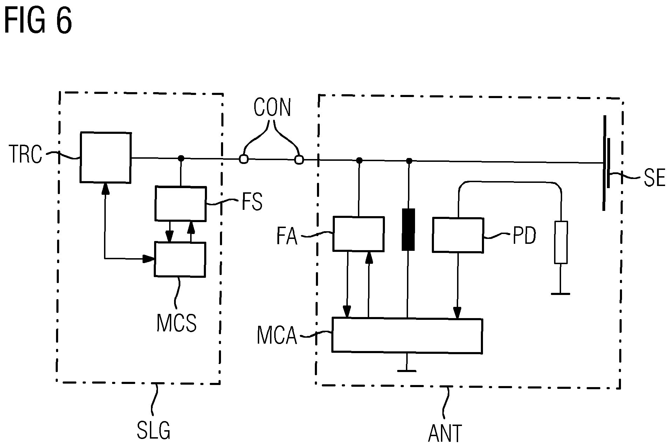

Eine zu der letztgenannten Anordnung alternative Ausführungsform ist in der Figur 4 gezeigt. Anstelle eines RFID-Transponders TAG wird dabei ein Mikrocontroller MCA verwendet, welcher einen elektronischen Schalter BS ("Backscatter Switch") betätigt; der Mikrocontroller MCA kann dabei Leistungsdaten aus dem Leistungsdetektor PD auslesen, welcher mittels des Kopplers CPL an einem Hochfrequenz-Pfad der Antenne ANT angekoppelt ist. Bei dieser Schaltung "simuliert" der Mikrocontroller MCA mit dem elektronischen Schalter BS für eine modulierte Rückstreuung ("backscattern") einen RFID-Transponder TAG, wie er im Zusammenhang mit den vorangegangenen Figuren bereits beschrieben wurde. Anstelle des Überschreitens einer Schwelle, was natürlich eine Vielzahl von Abfragezyklen mit jeweils stufenweise gesteigerter Sendeleistung erfordert, wird hier mittels einer auf der Anschlussleitung eingeprägten Gleichspannung die gezeigte Schaltung versorgt, wobei mit dem Mikrocontroller MCA die absolut gemessene Sendeleistung, die Antennenkenndaten ("Antenneneigenschaften") und auch andere Messgrößen (beispielsweise die Temperatur) an das Schreib-/Lesegerät SLG übertragen werden. Als besonders vorteilhafte Lösung für die Datenübertragung von der Antenne ANT zu dem Schreib-/Lesegerät SLG ist die Implementierung einer Software in dem Mikrocontroller MCA anzusehen, welche über das von dem Schreib-/Lesegerät SLG verwendete RFID-Protokoll den Datenaustausch analog zu den "produktiv" genutzten RFID-Transpondern ermöglicht. Somit kann das Schreib-/Lesegerät SLG die aktuelle "ankommende" Sendeleistung und die Antennendaten auf dieselbe Art auslesen, wie es gespeicherte Daten aus anderen RFID-Transpondern auslesen würde. Durch Abschalten der Gleichspannung oder durch die Übermittlung eines gesonderten Befehls kann die gezeigte Messschaltung vom Antennenport oder einem anderen Teil des Hochfrequenz-Pfads der Antenne ANT getrennt werden, um den operativen Betrieb nicht zu beeinflussen. In dem Mikrocontroller MCA können auch Kalibrierungsdaten für den Leistungsdetektor PD abgelegt werden, ferner kann über eine Temperaturmessung, welche auch im Mikrocontroller MCA erfolgen kann, eine Temperaturkompensation realisiert werden. So kann die momentane in der Antenne ANT verfügbare Sendeleistung mit einer hohen Messgenauigkeit ermittelt werden. Es ist auch denkbar, durch Anbindung eines elektronischen Beschleunigungssensors an den Mikrocontroller MCA den Neigungswinkel und die Ausrichtung (beispielsweise horizontal oder vertikal) der Antenne abzufragen.
Abweichend zu dem Schreib-/Lesegerät SLG aus den vorangegangenen Figuren zeigen die Figuren 5 und 6 ein Beispiel, bei dem das Schreib-/Lesegerät SLG neben dem standardmäßig vorhandenen Hochfrequenz-Baustein TRC ("Transceiver") um einen Mikrocontroller MCS und eine Filterschaltung FS ("Frequenzweiche") erweitert ist. Analog dazu enthält die in den Figuren 5 und 6 gezeigte Antenne ANT zwar ebenso wie die Antenne ANT aus dem vorangegangenen Ausführungsbeispiel einen Mikrocontroller MCA, dieser ist jedoch mit einer Filterschaltung FA an die Hochfrequenzleitung innerhalb der Antenne ANT angeknüpft. Im Gegensatz zu den vorangegangenen Beispielen kommuniziert die Antenne ANT mit dem Schreib-/Lesegerät SLG nicht über ein RFID-Kommunikationsprotokoll und somit mittels Hochfrequenz, sondern über Signale, die einer Gleichspannung aufmoduliert werden. Dieses Prinzip entspricht in vielerlei Hinsicht einem Verfahren aus der Satelliten-Antennentechnik (DiSEqC-Protokoll).

In dem Beispiel gemäß der Figur 5 wird, gesteuert durch den Mikrocontroller MCA, das Strahlungselement SE der Antenne ANT durch einen (elektronischen) Schalter abgetrennt, wodurch die Leitung intern mit ihrem Wellenwiderstand (hier: 50 Ω) abgeschlossen wird. Dies ermöglicht eine sehr hohe Genauigkeit der anschließenden Leistungsmessung des Leistungsdetektors PD, da der Einfluss des Strahlungselementes SE zuverlässig eliminiert wird.

In der Figur 6 ist eine ähnliche Schaltung dargestellt, wobei hier jedoch die Entkopplung über einen Richtkoppler CPL erfolgt, analog zu der Vorgehensweise in den Figuren 1 bis 4. Bei guter "Richtschärfe" des Kopplers CPL und ausreichend präziser Antennenanpassung kann auch hier mit einer ausreichenden Genauigkeit die Leistung bestimmt werden. Das eigentliche Verfahren zur Gewinnung von Messwerten für die Anpassung des Schreib-/Lesegerätes SLG an die konkret verwendete Antenne ANT ist dabei ähnlich zu den zuvor diskutierten Lösungsansätzen. Durch entsprechende Befehle wird die Schaltung in der Antenne ANT in einen Betriebszustand versetzt, bei dem die über die Antennenleitung AL "empfangene" Hochfrequenzleistung sowie die "Identifikation" bzw. die technischen Parameter der Antenne ANT an das Schreib-/Lesegerät SLG übermittelt werden. Dadurch kann in dem Schreib-/Lesegerät SLG die notwendige Sendeleistung zum Erreichen einer gewünschten Strahlungsleistung (EIRP) eingesellt werden. Der Mikrocontroller MCA hält hier die Kalibrierdaten des Leistungsdetektors PD sowie die Identifikationsdaten bzw. technischen Parameter der Antenne ANT zum Abruf bereit. Über die Filter FA, FS werden dabei die Daten in modulierter Form von dem Mikrocontroller MCA zu dem Mikrocontroller MCS übertragen und vom letztgenannten einer Kalibrierungs-Routine des Schreib-/Lesegerätes SLG zur Verfügung gestellt.

## Patentansprüche

1. Antenne (ANT) für ein Schreib-/Lesegerät (SLG) für RFID-Anordnungen,
wobei die Antenne (ANT) einen Anschluss zur Verbindung mit einem externen Antennenanschluss (CON) des Schreib-/Lesegerätes (SLG) mittels einer Antennenleitung (AL) aufweist,
wobei die Antenne (ANT) mit einem Datenspeicher (TAG, MCA) mit Typinformationen und/oder mit Eigenschaftsinformationen ausgestattet ist, wobei der Inhalt des Datenspeichers (TAG, MCA) von dem Schreib-/Lesegerät (SLG) auslesbar ist, und wobei die Antenne (ANT) eine Messeinrichtung (PD) zur Bestimmung zumindest eines Wertes der Feldstärke oder Leistung eines in die Antenne (ANT) von dem Schreib-/Lesegerät (SLG) eingespeisten Hochfrequenzsignals aufweist, wobei die Antenne (ANT) Mittel zur Übertragung des Inhaltes des Datenspeichers (TAG, MCA) und zur Information des Schreib-/Lesegerätes (SLG) über das Erreichen oder Überschreiten des zumindest einen Wertes mittels eines getakteten Kurzschließens der Antennenleitung (AL) aufweist, wobei die Antenne (ANT) zum bitweisen Übertragen der zu übertragenden Informationen durch das getaktete Kurzschließen ausgestaltet ist.

2. Antenne (ANT) nach Patentanspruch 1 **dadurch gekennzeichnet, dass**
die Antenne (ANT) einen an einer Hochfrequenzleitung oder an einem Strahlungselement (SE) der Antenne (ANT) angekoppelten Leistungssensor als Messeinrichtung (PD) aufweist, der derart eingerichtet und verschaltet ist, dass bei Erreichen oder Überschreiten eines minimalen Wertes der Feldstärke oder der Leistung der Datenspeicher (TAG, MCA) aktiviert wird, wobei die Mindest-Leistung als der zumindest eine Wert verwendbar ist.

3. Antenne (ANT) nach einem der vorhergehenden Patentansprüche,
**dadurch gekennzeichnet, dass**
die Antenne (ANT) als Datenspeicher (TAG, MCA) einen RFID-Transponder (TAG) aufweist,
wobei der RFID-Transponder (TAG) an eine Hochfrequenzleitung oder an ein Strahlungselement (SE) der Antenne (ANT) angekoppelt ist, und
wobei die Antenne derart ausgestaltet ist, dass der RFID-Transponder (TAG) durch das Erreichen oder Überschreiten einer minimalen Feldstärke oder Leistung aktiviert wird, wobei die Antenne zum Melden des Erreichens oder Überschreitens des zumindest einen Wertes an das Schreib-/Lesegerät (SLG) durch die Aktivierung des RFID-Transponders (TAG) eingerichtet ist.

4. Antenne (ANT) nach Patentanspruch 3, **dadurch gekennzeichnet,**
**dass** der RFID-Transponder (TAG) mit einer definierten Aktivierungswelle als die Messeinrichtung (PD) verwendbar ist.

5. Antenne (ANT) nach einem der vorhergehenden Patentansprüche,
**dadurch gekennzeichnet,**
**dass** die Höhe des zumindest einen Wertes, insbesondere eines Schwellwertes oder einer Ansprechschwelle, in dem Datenspeicher (TAG, MCA) abgelegt ist oder anhand einer in dem Datenspeicher (TAG, MCA) gespeicherten Typinformation ermittelbar ist, und an das Schreib-/Lesegerät übermittelbar ist.

6. Antenne (ANT) nach einem der vorhergehenden Patentansprüche,
**dadurch gekennzeichnet, dass**
der Datenspeicher (TAG, MCA) und/oder die Messeinrichtung (PD) derart ausgestaltet sind, dass diese mittels eines über die Antennenleitung (AL) empfangenen Signals oder mittels einer am Antennenanschluss (CON) anliegenden Gleichspannung aktivierbar ist bzw. sind.

7. Antenne (ANT) nach einem der vorhergehenden Patentansprüche,
**dadurch gekennzeichnet, dass**
die Antenne (ANT) eine Steuerungseinrichtung, insbesondere einen Mikrocontroller (MCA), aufweist, wobei die Steuerungseinrichtung zur Übermittlung des Inhalts des Datenspeichers (TAG, MCA) und zumindest eines jeweils durch die Messeinrichtung (PD) gemessenen absoluten Wertes für die Feldstärke oder Leistung über den Antennenanschluss (CON) eingerichtet ist.

8. Antenne (ANT) nach Patentanspruch 7, **dadurch gekennzeichnet, dass**
die Steuerungseinrichtung den Datenspeicher (TAG, MCA) umfasst.

9. Schreib-/Lesegerät (SLG) für RFID-Anordnungen, wobei das Schreib-/Lesegerät zur Verbindung mit einer externen Antenne (ANT) mittels einer Antennenleitung (AL) angepasst ist, wobei das Schreib-/Lesegerät (SLG) zur Anpassung einer Sendeleistung und/oder zur Bestimmung einer maximalen Sendeleistung in Abhängigkeit vom Typ oder von Eigenschaften der externen Antenne (ANT) und in Abhängigkeit der Dämpfung der Antennenleitung (AL) eingerichtet ist, wobei das Schreib-/Lesegerät (SLG) zum Auslesen einer Typ-oder Eigenschaftsinformation aus der Antenne (ANT) und zur selbsttätigen Berücksichtigung der Dämpfung durch Empfang einer Information über das Erreichen oder Überschreiten zumindest eines Wertes für die Feldstärke oder Leistung eines in der Antenne (ANT) vom Schreib-/Lesegerät (SLG) eingegangenen Hochfrequenz-Signals und zur In-Bezugsetzung dieses zumindest einen Wertes zu einem relativen oder absoluten Wert für das dabei von dem Schreib-/Lesegerät (SLG) abgegebene Hochfrequenz-Signal eingerichtet ist, wobei das Schreib-/Lesegerät (SLG) zum Empfang der von der Antenne (ANT) mittels eines getakteten Kurzschließens der Antennenleitung (AL) bitweisen übertragenen Inhaltes des Datenspeichers (TAG, MCA) und der Information über das Erreichen oder Überschreiten des zumindest einen Wertes ausgestaltet ist, und
wobei das Schreib-/Lesegerät (SLG) zur Ermittlung der maximalen oder einer zu verwendenden Sendeleistung anhand der Typ- oder Eigenschaftsinformationen und anhand des Bezuges zwischen der Leistung des abgegebenen Hochfrequenz-Signals und der Information über den zumindest einen Wert eingerichtet ist.

10. System aus einem Schreib-/Lesegerät (SLG) für RFID-Anordnungen und einer mittels einer Antennenleitung (AL) angeschlossenen externen Antenne (ANT),
wobei das System zur automatischen Anpassung des Schreib-/Lesegerätes (SLG) an die Antenne (ANT) und die Antennenleitung (AL) eingerichtet ist,
**dadurch gekennzeichnet,**
**dass** das System aus einem Schreib-/Lesegerät (SLG) gemäß Patentanspruch 9 und einer Antenne (ANT) gemäß einem der Patentansprüche 1 bis 8 gebildet ist.

11. Verfahren zur Anpassung eines Schreib-/Lesegerätes (SLG) für RFID-Anordnungen an eine mittels einer Antennenleitung (AL) angeschlossenen externen Antenne (ANT), wobei von dem Schreib-/Lesegerät (SLG) aus der Antenne (ANT) eine Typinformation und/oder Eigenschaftsinformationen ausgelesen werden,
dass von dem Schreib-/Lesegerät (SLG) zumindest ein Hochfrequenzsignal abgegeben und in die Antenne (ANT) eingespeist wird, wobei von der Antenne (ANT) eine Information über das Erreichen oder Überschreiten zumindest eines Wertes des in der Antenne (ANT) erfassten Hochfrequenzsignals mittels eines getakteten Kurzschließens der Antennenleitung (AL) bitweise zu dem Schreib-/Lesegerät (SLG) übermittelt wird, und
dass das Schreib-/Lesegerät (SLG) anhand der Typinformation und/oder der Eigenschaftsinformationen der Antenne (ANT) und anhand des Bezugs zwischen der relativen oder absoluten abgegebenen Leistung und dem zumindest einen Wert eine Anpassung, insbesondere einer maximalen Sendeleistung, ausführt.

## Claims

1. Antenna (ANT) for a read/write unit (SLG) for RFID arrangements,
wherein the antenna (ANT) has a connection for connection to an external antenna connection (CON) of the read/write unit (SLG) by means of an antenna line (AL),
wherein the antenna (ANT) is equipped with a data memory (TAG, MCA) having type information and/or having property information, wherein the content of the data memory (TAG, MCA) can be read by the read/write unit (SLG), and wherein the antenna (ANT) has a measuring device (PD) for determining at least one value of the field strength or power of a radio-frequency signal that is fed into the antenna (ANT) by the read/write unit (SLG), wherein the antenna (ANT) has means for transmitting the content of the data memory (TAG, MCA) and for informing the read/write unit (SLG) about the at least one value being reached or exceeded by means of clocked shorting of the antenna line (AL), wherein the antenna (ANT) is configured for bit-by-bit transmission of the transmittable information by the clocked shorting.

2. Antenna (ANT) according to Patent Claim 1,
**characterized in that**
the antenna (ANT) has a power sensor as a measuring device (PD), which power sensor is coupled to a radio-frequency line or to a radiation element (SE) of the antenna (ANT) and is set up and connected up such that the data memory (TAG, MCA) is activated when a minimum value of the field strength or of the power is reached or exceeded, wherein the minimum power can be used as the at least one value.

3. Antenna (ANT) according to one of the preceding patent claims,
**characterized in that**
the antenna (ANT) has an RFID transponder (TAG) as a data memory (TAG, MCA),
wherein the RFID transponder (TAG) is coupled to a radio-frequency line or to a radiation element (SE) of the antenna (ANT), and
wherein the antenna is configured such that the RFID transponder (TAG) is activated by virtue of a minimum field strength or power being reached or exceeded, wherein the antenna is set up to report the at least one value being reached or exceeded to the read/write unit (SLG) by the activation of the RFID transponder (TAG).

4. Antenna (ANT) according to Patent Claim 3,
**characterized**
**in that** the RFID transponder (TAG) can be used with a defined activation threshold as the measuring device (PD) .

5. Antenna (ANT) according to one of the preceding patent claims,
**characterized**
**in that** the level of the at least one value, particularly of a threshold value or of a response threshold, is stored in the data memory (TAG, MCA) or can be ascertained from a piece of type information that is stored in the data memory (TAG, MCA), and can be transmitted to the read/write unit.

6. Antenna (ANT) according to one of the preceding patent claims,
**characterized in that**
the data memory (TAG, MCA) and/or the measuring device (PD) are configured such that they can be activated by means of a signal received via the antenna line (AL) or by means of a DC voltage that is present on the antenna connection (CON).

7. Antenna (ANT) according to one of the preceding patent claims,
**characterized in that**
the antenna (ANT) has a control device, particularly a microcontroller (MCA), wherein the control device is set up to transmit the content of the data memory (TAG, MCA) and at least one absolute value for the field strength or power, which absolute value is respectively measured by the measuring device (PD), via the antenna connection (CON).

8. Antenna (ANT) according to Patent Claim 7,
**characterized in that**
the control device comprises the data memory (TAG, MCA).

9. Read/write unit (SLG) for RFID arrangements,
wherein the read/write unit is adjusted for connection to an external antenna (ANT) by means of an antenna line (AL),
wherein the read/write unit (SLG) is set up to adjust a transmission power and/or to determine a maximum transmission power on the basis of the type or of properties of the external antenna (ANT) and on the basis of the damping of the antenna line (AL),
wherein the read/write unit (SLG) is set up to read a piece of type or property information from the antenna (ANT) and to automatically take account of the damping by receiving a piece of information about at least one value for the field strength or power of a radio-frequency signal received in the antenna (ANT) from the read/write unit (SLG) being reached or exceeded and to relate this at least one value to a relative or absolute value for the radio-frequency signal that is output by the read/write unit (SLG) in the process,
wherein the read/write unit (SLG) is configured to receive the content of the data memory (TAG, MCA) transmitted bit by bit by the antenna (ANT) by means of clocked shorting of the antenna line (AL), and the information about the at least one value being reached or exceeded, and
wherein the read/write unit (SLG) is set up to ascertain the maximum transmission power, or a transmission power that is to be used, from the type or property information and from the relationship between the power of the output radio-frequency signal and the information about the at least one value.

10. System comprising a read/write unit (SLG) for RFID arrangements and an external antenna (ANT) that is connected by means of an antenna line (AL),
wherein the system is set up to automatically match the read/write unit (SLG) to the antenna (ANT) and the antenna line (AL) that is used,
**characterized**
**in that** the system is formed from a read/write unit (SLG) according to Patent Claim 9 and an antenna (ANT) according to one of Patent Claims 1 to 8.

11. Method for matching a read/write unit (SLG) for RFID arrangements to an external antenna (ANT) that is connected by means of an antenna line (AL),
wherein the read/write unit (SLG) reads a piece of type information and/or property information from the antenna (ANT),
in that the read/write unit (SLG) outputs at least one radio-frequency signal and feeds it into the antenna (ANT), wherein the antenna (ANT) transmits a piece of information about at least one value of the radio-frequency signal captured in the antenna (ANT) being reached or exceeded to the read/write unit (SLG) bit by bit by means of clocked shorting of the antenna line (AL), and
in that the read/write unit (SLG) uses the piece of type information and/or the property information from the antenna (ANT) and uses the relationship between the relative or absolute output power and the at least one value to make an adjustment, particularly for a maximum transmission power.

## Revendications

1. Antenne (ANT) pour un appareil (SLG) d'écriture/lecture pour des agencements RFID,
l'antenne (ANT) ayant une borne de liaison à une borne (CON) d'antenne extérieure de l'appareil (SLG) d'écriture/lecture au moyen d'une ligne (AL) d'antenne, l'antenne (ANT) étant équipée d'une mémoire (TAG, MCA) de données ayant des informations de type et/ou des informations de propriété, le contenu de la mémoire (TAG, MCA) de données étant déchiffrable par l'appareil (SLG) d'écriture/lecture et l'antenne (ANT) ayant un dispositif (PD) de mesure pour déterminer au moins une valeur de l'intensité du champ ou de la puissance d'un signal de haute fréquence injecté dans l'antenne (ANT) par l'appareil (SLG) d'écriture/lecture, l'antenne (ANT) ayant des moyens de transfert du contenu de la mémoire (TAG, MCA) de données et d'information de l'appareil (SLG) d'écriture/lecture sur l'atteinte ou le dépassement de la au moins une valeur, au moyen d'un court-circuit cadencé de la ligne (AL) d'antenne, l'antenne (ANT) étant conformée pour la transmission bit par bit des informations à transmettre par le court-circuit cadencé.

2. Antenne (ANT) suivant la revendication 1,
**caractérisée en ce que**
l'antenne (ANT) a, comme dispositif (PD) de mesure, un capteur de puissance couplé à une ligne de haute fréquence ou à un élément (SE) de rayonnement de l'antenne (ANT), qui est conçu et connecté de manière à ce que, lorsque est atteinte ou dépassée une valeur minimum de l'intensité du champ ou de la puissance, la mémoire (TAG, MCA) de données soit activée, la puissance minimum pouvant être utilisée comme la au moins une valeur.

3. Antenne (ANT) suivant l'une des revendications précédentes,
**caractérisée en ce que**
l'antenne (ANT) a un transpondeur RFID (TAG) comme mémoire (TAG, MCA) de données,
le transpondeur RFID (TAG) étant couplé à une ligne de haute fréquence ou à un élément (SE) de rayonnement de l'antenne (ANT) et
l'antenne étant conformée de manière à ce que le transpondeur RFID (TAG) soit activé par l'atteinte ou le dépassement d'une intensité de champ ou d'une puissance minimum, l'antenne étant conçue pour annoncer l'atteinte ou le dépassement de la au moins une valeur à l'appareil (SLG) d'écriture/lecture, par l'activation du transpondeur RFID (TAG).

4. Antenne (ANT) suivant la revendication 3,
**caractérisée en ce que**
le transpondeur RFID (TAG) peut être utilisé par un seuil d'activation défini comme dispositif (PD) de mesure.

5. Antenne (ANT) suivant l'une des revendications précédentes,
**caractérisée en ce que**
le niveau de la au moins une valeur, notamment une valeur de seuil ou un seuil de réaction, est mémorisé dans la mémoire (TAG, MCA) de données ou peut être déterminé à l'aide d'une information de type mémorisé dans la mémoire (TAG, MCA) de données et être transmis à l'appareil d'écriture/lecture.

6. Antenne (ANT) suivant l'une des revendications précédentes,
**caractérisée en ce que**
la mémoire (TAG, MCA) de données et/ou le dispositif (PD) de mesure est conformé de manière à pouvoir être activé au moyen d'un signal reçu par la ligne (AL) d'antenne ou au moyen d'une tension continue appliquée à la borne (CON) d'antenne.

7. Antenne (ANT) suivant l'une des revendications précédentes,
**caractérisée en ce que**
l'antenne (ANT) a un dispositif de commande, notamment une micro-unité de commande (MCA), le dispositif de commande étant conçu pour déterminer le contenu de la mémoire (TAG, MCA) de données et d'au moins une valeur absolue, mesurée par le dispositif (PD) de mesure, de l'intensité du champ ou de la puissance sur la borne (CON) d'antenne.

8. Antenne (ANT) suivant la revendication 7,
**caractérisée en ce que**
le dispositif de commande comprend la mémoire (TAG, MCA) de données.

9. Appareil (SLG) d'écriture/lecture pour des agencements RFID,
l'appareil d'écriture/lecture étant adapté pour être relié à une antenne (ANT) extérieure au moyen d'une ligne (AL) d'antenne,
l'appareil (SLG) d'écriture/lecture étant conçu pour l'adaptation d'une puissance d'émission et/ou pour la détermination d'une puissance d'émission maximum en fonction du type ou des propriétés de l'antenne (ANT) extérieure et en fonction l'atténuation de la ligne (AL) d'antenne,
dans lequel l'appareil (SLG) d'écriture/lecture est conçu pour lire une information de type ou une information de propriété à partir de l'antenne (ANT) et pour tenir compte automatiquement de l'atténuation par la réception d'une information sur l'atteinte ou le dépassement d'au moins une valeur de l'intensité du champ ou de la puissance d'un signal de haute fréquence entré dans l'antenne (ANT) par l'appareil (SLG) d'écriture/lecture et pour la mise en rapport de cette au moins une valeur avec une valeur relative ou absolue du signal de haute fréquence émis par l'appareil (SLG) d'écriture/lecture,
l'appareil (SLG) d'écriture/lecture étant conformé pour la réception du contenu, transmis bit par bit par l'antenne (ANT) au moyen d'un court-circuit cadencé de la ligne (AL) d'antenne, de la mémoire (TAG, MCA) de données et de l'information sur l'atteinte ou le dépassement de la au moins une valeur et
l'appareil (SLG) d'écriture/lecture étant conçu pour la détermination d'une puissance d'émission maximum à utiliser à l'aide des informations de type ou de propriété et à l'aide du rapport entre la puissance du signal de haute fréquence émis et l'information sur la au moins une valeur.

10. Système composé d'un appareil (SLG) d'écriture/lecture pour des agencements RFID et d'une antenne (ANT) extérieure raccordée au moyen d'une ligne (AL) d'antenne,
dans lequel le système est conçu pour l'adaptation automatique de l'appareil (SLG) d'écriture/lecture à l'antenne (ANT) et à la ligne (AL) d'antenne,
**caractérisé**
**en ce que** le système est formé d'un appareil (SLG) d'écriture/lecture suivant la revendication 9 et d'une antenne (ANT) suivant l'une des revendications 1 à 8.

11. Procédé d'adaptation d'un appareil (SLG) d'écriture/lecture, pour des agencements RFID, à une antenne (ANT) extérieure raccordée au moyen d'une ligne (AL) d'antenne,
dans lequel il est déchiffré, par l'appareil (SLG) d'écriture/lecture, à partir de l'antenne (ANT) une information de type et/ou des informations de propriété,
en ce qu'il est émis, par l'appareil (SLG) d'écriture/lecture, au moins un signal de haute fréquence, qui est injecté dans l'antenne (ANT), dans lequel il est transmis, bit par bit à l'appareil (SLG) d'écriture/lecture, au moyen d'un court-circuit cadencé, par l'antenne (ANT), une information sur l'atteinte ou le dépassement d'au moins une valeur du signal de haute fréquence détecté dans l'antenne (ANT) et l'appareil (SLG) d'écriture/lecture effectue, à l'aide de l'information de type et/ou des informations de propriété de l'antenne (ANT) et à l'aide du rapport entre la puissance relative ou absolue cédée et la au moins une valeur, une adaptation, notamment d'une puissance d'émission maximum.
